# EUROPEAN PATENT APPLICATION

(11) **EP 1 481 854 A1**
(43) Date of publication of application: **01.12.2004**
(21) Application number: 02701301.0
(22) Date of filing: 07.02.2002
(51) Int. Cl.: B60R 21/16

(54) **AIRBAG COMPRISING TEARABLE SUPPORT BAND**

(71) Applicant: Dalphi Metal Espana, S.A., 28006 Madrid (ES)
(72) Inventor: LOIS MARTINEZ, Carlos, 36213 Vigo (ES); VILA ESTEVEZ, Gustavo, 36213 Vigo (ES)
(74) Representative: Elzaburu Marquez, Alberto
(86) International application number: PCT/ES2002/000055
(87) International publication number: WO 2003/066388

(57) **Abstract**

Airbag formed by an upper panel and a lower panel joined by peripheral stitching with a limiting strap divided into two parts by means of linear cuts, the edges of which are joined to different areas of the bag such that inflation of the bag gives rise to tearing of the limiting strap along tear lines continuing the cut lines dividing the strap into two parts. These limiting straps function in shear and therefore the airbag adapts to the pressure exerted by the occupant's body on the airbag, gradually tearing the limiting straps and thus obtaining a controlled pressure, which improves the deceleration of the occupant.

The airbag according the invention has great ability to adapt to the type of vehicle occupant and to the momentum of the impact.

## Description

### Field of the invention

The present invention relates to an airbag with limiting straps inside it to enable airbag deployment to be adapted to the requirements of each impact, not only those determined by the occupant's morphology but also those deriving from the momentum of the impact.

### Background of the invention

Many inflatable safety devices (airbags) are known in the current state of the art for damping the blow received by the driver and, as appropriate, the passengers of a motor vehicle in the event of a collision, above all in a head-on collision.

Known airbags, which are usually located in the front and side areas of vehicles, consist of a folded pouch or bag that is inflated with a gas when a collision or blow to the automobile is detected. In this way, controlled deceleration of the vehicle's occupants is made possible, reducing the chances of potential injury.

To optimize the functioning of airbags, it has been proposed to use interior limiting straps joined to the upper panel and the lower panel in order to control both their deployment behavior and the shape of the bag in the inflated condition. By using these limiting straps it is possible to confer, on the inflated bag, a "flattened" form, which is usually regarded as appropriate for protecting vehicle occupants and for limiting the bag's volume, thereby preventing the inflated bag from possibly injuring them.

As examples of airbags with limiting straps having these characteristics, mention may be made of those described in patents GB 2 261 855 A and GB 2 310 835 A.

These limiting straps function under tension, and the prior art has generated various proposals for achieving appropriate levels of tensile strength on their part. Thus, for example, patent EP 0 658 459 discloses limiting straps with reinforcement parts oriented so as to improve tensile strength, and patent EP 0 824 419 discloses limiting straps joined to the upper and lower panels by means of specific stitching, ensuring that they function correctly.

Although this type of limiting strap achieves the objectives mentioned, it is not possible to control the shape of the airbag or its volume and pressure as a function of the anthropomorphic characteristics of the occupant and the momentum of the impact as currently required by the automobile industry.

The present invention offers a solution for meeting this demand.

### Summary of the invention

The basic objective of this invention is an airbag that allows deployment of the airbag to be adapted both to the anthropomorphic characteristics of the vehicle occupant and to the momentum of the impact.

On the one hand, this objective involves controlling the shape of the airbag in the deployed state. In the case of front airbags, it is usually appropriate for the bag to be formed by joining two panels of circular shape, but it is nevertheless advantageous for the deployed bag to have neither a circular vertical section nor a very domed horizontal section, as would be determined by the shape of the panels, but a shape that is narrower than the circular shape and a less domed (shorter) section, this being adjusted to the morphology of the vehicle occupant protected by the airbag.

On the other hand, it involves controlling the volume and pressure of the airbag as a function of the particular characteristics of each impact, an aim that, in the automobile industry, is coming to be associated with those components that are capable of behavior that adapts to the various circumstances with which they may be confronted, adapting appropriately in each case, or, in other words, adapting "intelligently".

These objectives are achieved by incorporating, into the airbag, limiting straps that are configured in the form of at least two delimited parts, one or more cuts being made in an initial strap, and that are each fixed in different areas of the airbag such that, during airbag deployment and a specific level being achieved in terms of internal pressure, an expansion thereof gives rise to a tension over the limiting straps that generates their tearing in the direction of the cut lines delimiting the aforesaid two parts.

Unlike limiting straps that are known in the prior art, which function under tension, the limiting straps according to the invention function in shear, and therefore the airbag adapts to the pressure exerted by the occupant's body on the airbag, gradually tearing the limiting straps and thereby obtaining a controlled pressure that improves the occupant's deceleration.

Hence, an airbag with limiting straps according to the present invention has the ability to adapt to the type of vehicle occupant and to the momentum of the impact since not alone is the position of the bag at the moment of deployment controlled or the contact area to be protected defined - a typical function of any interior limiting strap - but airbag deployment is successfully achieved in such a manner that optimum deceleration of the occupant takes place.

These and other characteristics and advantages of the invention will become more apparent from the detailed description of the embodiments of the invention given below for illustrative and non-limiting purposes, with reference to the accompanying drawings.

### Description of the figures

Figures 1a and 1b are diagrammatic cross-sectional views of an airbag known from the prior art, with a limiting strap functioning under tension, Figure 1a with the airbag in the folded state and Figure 1b with the airbag in the deployed state.
Figures 2a and 2b are diagrammatic cross-sectional views of an airbag according to the invention functioning in shear, Figure 2a with the airbag in the folded state and Figure 2b with the airbag in the deployed state.
Figures 3, 4, and 5 are diagrammatic perspective views of three airbags in different embodiments of this invention.
Figure 6 is a front view of an airbag with a limiting strap configured in order to control its width.
Figure 7a is a cross-sectional view of an airbag with a limiting strap configured in order to control its width and its height, and Figure 7b is a plan view of this limiting strap.

### Detailed description of the invention

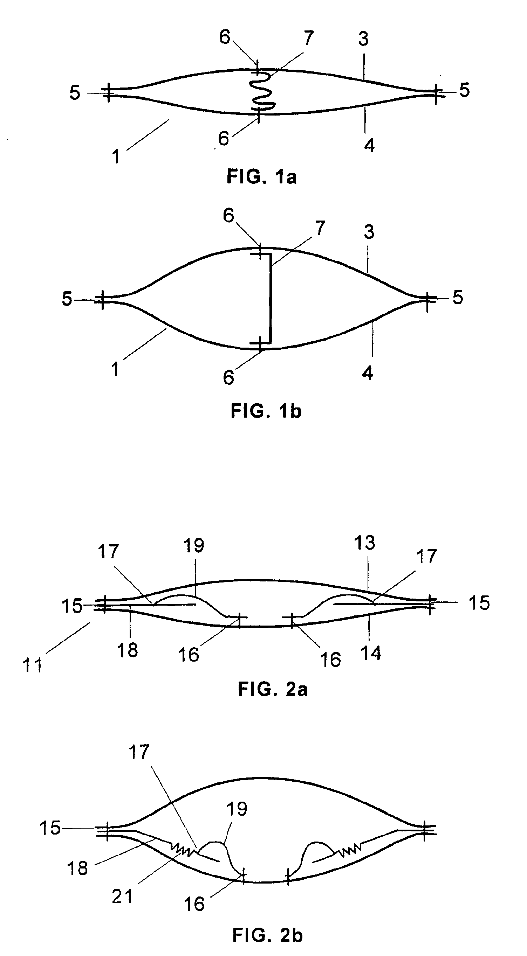

Figures 1a and 1b show, in its two basic states, the bag 1 of an airbag known from the prior art, formed by an upper panel 3 and a lower panel 4 joined by stitching 5 and having, inside, a limiting strap 7 joined to the upper and lower panels by stitching 6.

In Figure 1a, the bag is not yet deployed and therefore the limiting strap 7 is not subject to tension. In Figure 1b, the bag has already been deployed and the limiting strap 7 is subject to tension as a result of the internal pressure that exists in the bag provided by the gas supplied by a gas generator (not shown).

The basic effect of the limiting strap 7 logically consists in controlling the magnitude of the displacement of the bag in the direction of its deployment toward the occupant.

Figures 2a and 2b show, in its two basic states, the bag 11 of an airbag according to the invention formed by an upper panel 13, a lower panel 14, and two limiting straps 17 fixed on one side to the peripheral stitching 15 joining the two panels and, on the other side, to the lower panel by means of stitching 16.

Each strap 17 is configured in at least two parts 18 and 19 delimited by means of cuts made in it such that the application of a tension over its ends gives rise to tearing of the strap.

In Figure 2a, the bag has not yet been deployed and therefore the limiting straps 17 are not subject to tension.

In Figure 2b, the bag has already been deployed and the limiting straps 17, fixed via one end of the part 19 to the lower panel 14 of the bag by means of the stitching 16 and via one end of the part 18 to the peripheral stitching 15 of the two panels of the bag, have been subjected to a tension as a consequence of the internal pressure that exists in the bag provided by the gas, and this has given rise to tearing of the limiting strap, which is shown by means of the broken line 21.

In this way, the limiting straps 17 make it possible to control not only the shape of the bag during its deployment but also the internal pressure of the bag, facilitating its adaptation to the vehicle occupant's type and to the momentum of the impact.

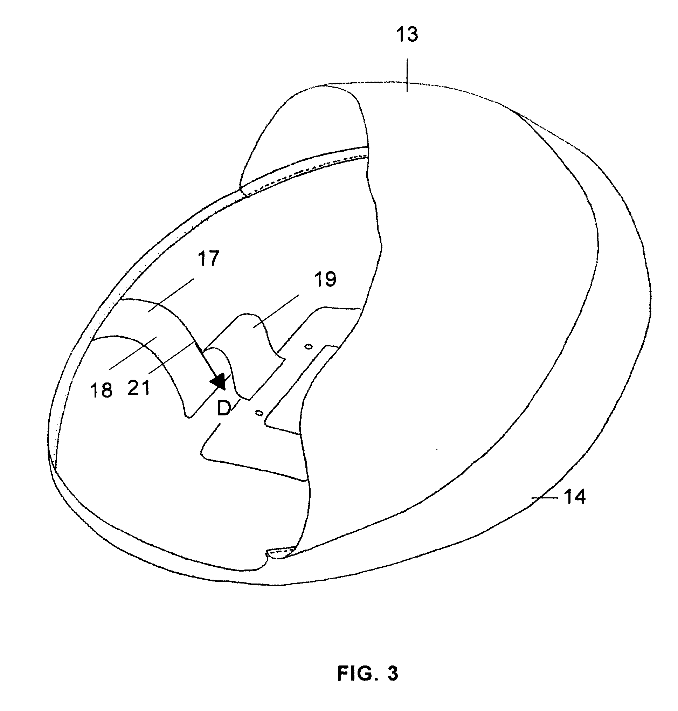

Figure 3 shows, in perspective, an embodiment of the invention that makes it possible to appreciate more clearly the configuration of a limiting strap 17 configured in two parts 18 and 19 delimited by a single cut. Consequently, there is a single tear line in the direction of the arrow D.

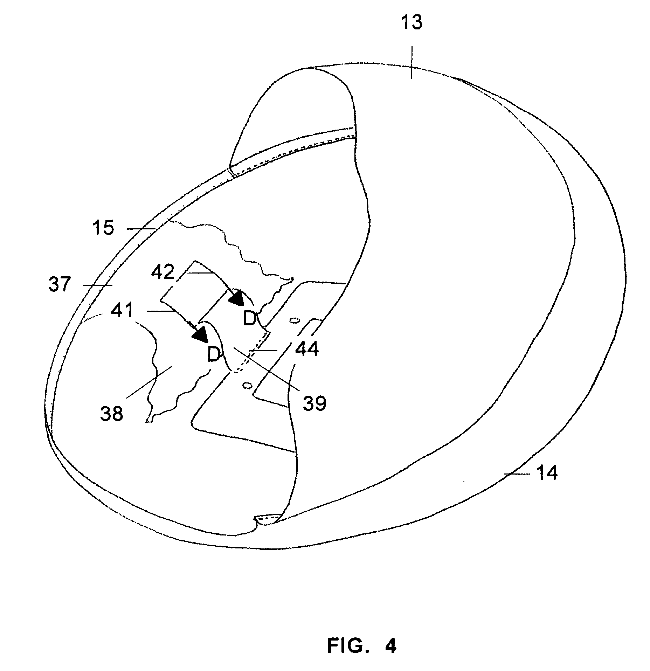

Figure 4 shows, in perspective, another embodiment of the invention with a limiting strap 37 configured in the form of a first part 38 joined to the peripheral stitching 15 of the panels 13 and 14 and a second part 39 produced in the form of a tab by means of cuts along the lines 41 and 42, the end of which is joined to the lower panel 14 by means of stitching 44.

The increase in the internal pressure as a result of inflation of the bag will in this case give rise to tearing of the strap by means of the continuation of the cut lines 41 and 42, indicated by means of the arrows D.

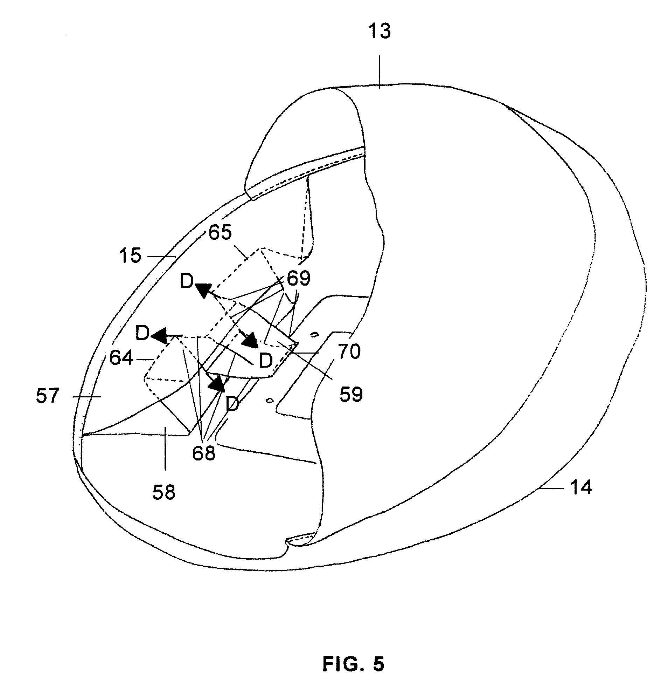

Figure 5 shows, in perspective, a third embodiment of the invention with a limiting strap 57 configured by a first part 58 joined on one side to the peripheral stitching 15 of the panels 13 and 14 and on the other side to the lower panel by the stitching 64, 65, and by a second part 59, in the form of a folded tab, produced by means of the cuts 68, 69, which is joined to the base of the lower profile by stitching 70. This configuration provides four lines of tearing in the direction indicated by the arrow D.

Assuming that the material is appropriate, a greater number of tear lines makes it easier to control greater pressures in the airbag.

The limiting straps according to the present invention are also particularly efficient at controlling the shape of the airbag during deployment. The width of the airbag is successfully controlled with any of the configurations shown in Figures 3, 4, and 5.

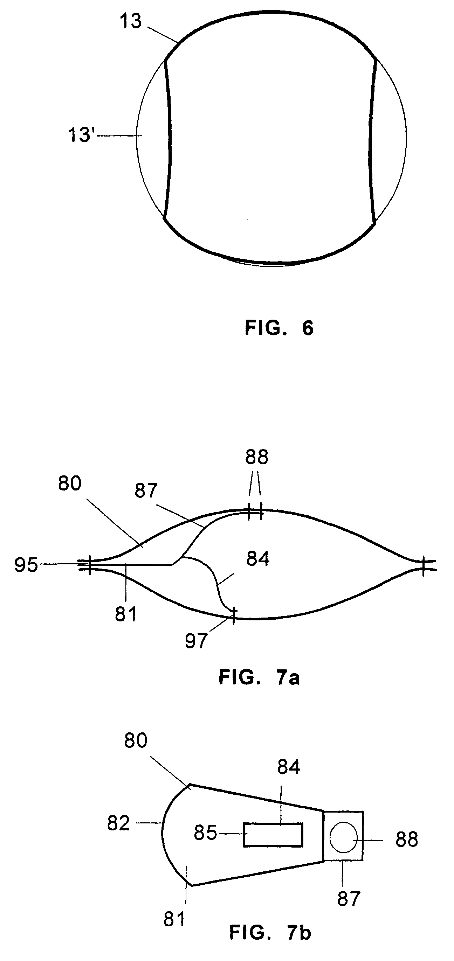

In all of them, and provided the airbag panels have a circular shape and that there are two limiting straps arranged on the right and on the left from the occupant's perspective, the view of the deployed airbag would be an upper panel 13 of rectangular shape, of the type shown in Figure 6, in which a finer line 13' shows the circular shape that would be achieved without a limiting strap and also when the latter has been completely torn. As may be readily understood, the rectangular shape is more appropriate than the circular shape for protecting vehicle occupants.

It is also possible to control the height of the airbag by including in the limiting strap a piece for joining to the central part of the upper panel. In the embodiment shown in Figures 7a and 7b, it is possible to see a limiting strap 80 (for reasons of simplicity, alone 1 is shown), which has two tear lines and is configured by a first part 81 in the form of a circular ring, the edge 82 of which is joined to the stitching 95 of the upper and lower panels of the bag, a second part 84 in the form of a rectangular tab, the end 85 of which is joined to the lower panel by means of stitching 97, and a third part 87 that will be joined to the upper panel by means of circular stitching 88.

To summarize the advantages of an airbag according to the invention over airbags known from the prior art, it is appropriate to mention the following:
- control of the position and shape of the airbag in deployment;
- greater ability to adapt to occupants' morphology and to the type of momentum generated by a deceleration;
- internal absorption of energy in the event of a high momentum or forward position of the vehicle occupant, any external venting thereby possibly being unnecessary;
- optimum response for multistate gas generators since, in such a case, retention strap alone would function for the state of greater pressure and would adapt to the characteristics thereof.

Although a number of embodiments of the invention have been described and shown, it is obvious that modifications included within the scope thereof may be introduced into it, and it must be regarded as not being limited to said embodiments but to the content of the following claims.

## Claims

1. A vehicle airbag comprising a bag (11) formed by an upper panel (13) and a lower panel (14) joined by means of peripheral stitching (15) that expands when supplied with a gas by a gas generator when the vehicle is involved in a collision, **characterized in that** it includes at least one limiting strap (17, 37, 57) in which linear cuts (21; 41, 42; 68, 69) are made, delimiting two parts (18, 19; 38, 39; 58, 59), two of the edges of which are joined to different areas of the bag so that inflation of the bag gives rise to the tearing of the limiting strap (17, 37, 57) along tear lines (D) continuing the aforesaid cut lines (21; 41, 42; 68, 69).

2. The vehicle airbag as claimed in claim 1, **characterized in that** one edge of the first part (18, 38, 58) of the limiting strap (17, 37, 57) is joined to the aforesaid peripheral stitching (15) and one edge of the second part (19, 39, 59) of the limiting strap (17, 37, 57) is joined to the lower panel (14).

3. The vehicle airbag as claimed in claims 1 or 2, **characterized in that** a cut line (21) divides an area of the limiting strap (17) into two parts (18, 19), the contiguous edges of which are those joined to different areas of the bag (11).

4. The vehicle airbag as claimed in claim 3, **characterized in that** the limiting strap (17) and the two parts (18, 19) delimited therein by means of the aforesaid cut line (21) have a rectangular shape.

5. The vehicle airbag as claimed in claims 1 or 2, **characterized in that** the second part of the limiting strap (37) is a tab (39) made in its central area by means of cut lines (41, 42), the edge of which is joined to an area of the bag opposite that joining the edge of the first part (38) with the effect that inflation of the bag gives rise to an increase in the length of the tab (39), continuing the aforesaid cut lines (41, 42).

6. The vehicle airbag as claimed in claim 5, **characterized in that** the limiting strap (37) and the tab (39) delimited therein have a rectangular shape.

7. The vehicle airbag as claimed in claim 5, **characterized in that** the limiting strap has a circular-ring shape and the tab made therein has a rectangular shape.

8. The vehicle airbag as claimed in claims 1 or 2, **characterized in that** the second part of the limiting strap (57) is a band (59) made in its central area by means of cut lines (68, 69), which is folded in its middle and the edge of the fold joins to an area of the bag opposite that joining the edge of the first part (58) of the limiting strap (57), with the effect that inflation of the bag gives rise to an increase in the length of the band (59), continuing the aforesaid cut lines (68, 69) via their two ends.

9. The vehicle airbag as claimed in claim 8, **characterized in that** the limiting strap (57) and the band (59) delimited therein have a rectangular shape.

10. The vehicle airbag as claimed in claim 8, **characterized in that** the limiting strap (57) has a circular-ring shape and the band (59) made therein has a rectangular shape.

11. The vehicle airbag as claimed in any of the preceding claims, **characterized in that** the limiting strap includes a third part (87) joined to the upper panel (13) for limiting the height of the bag (11) of the airbag during its inflation.
